# EUROPEAN PATENT APPLICATION

(11) **EP 3 075 794 A1**
(43) Date of publication of application: **05.10.2016**
(21) Application number: 16162774.0
(22) Date of filing: 30.03.2016
(51) Int. Cl.: C09D 11/102, C09D 11/322, D06P 5/30

(54) **PIGMENT INK COMPOSITION, FOR PRINTING WITH A BINARY DEFLECTED CONTINUOUS INK JET, WITH NON-CHARGED DROPS, OF TEXTILE SUBSTRATES, MARKING METHOD AND MARKED TEXTILE SUBSTRATE**

(30) Priority: 31.03.2015 FR 1552746
(71) Applicant: Dover Europe Sàrl, 1214 Vernier (CH)
(72) Inventor: DE SAINT ROMAIN, Pierre, 26000 VALENCE (FR)
(74) Representative: Brevalex

(57) **Abstract**

A pigment ink composition, for the printing of a textile substrate, liquid at room temperature, comprising a solvent, said ink composition being an ink composition specifically for printing with a binary deflected continuous jet printing technique, wherein said ink composition forms, during the printing, drops which are not charged by an electric field, which each have a zero electric charge, which each form a dipole under the effect of an electric field, and which are then deflected by said electric field, characterized in that said ink composition comprises:
a) an aqueous solvent comprising at least 50% by volume of water based on the total volume of the solvent;
b) at least 13% by weight, preferably at least 15% by weight, based on the total weight of the ink composition, of one or several dispersion(s) of binding polymer(s);
c) one or several dispersion(s) of pigment(s); and further characterized in that:
d) the binding polymer(s) dispersion(s)/pigment(s) dispersion(s) weight ratio is greater than 2, preferably greater than 3; and in that
e) the ink composition has a dynamic viscosity at 20°C of more than 16 cPs, preferably more than 20 cPs, still preferably more than 25 cPs.The use of this ink composition in a printer or printing head applying said printing technique.

The use of this ink composition in a printer or printing head applying said printing technique.

A method for treating and/or marking a textile substrate by projecting on this substrate, said ink composition by said printing technique.

A textile substrate, provided with a marking or a treatment obtained by drying and/or absorption of said ink composition.

## Description

### TECHNICAL FIELD

The invention relates to a pigment ink composition, for treating and/or marking or printing of substrates, supports, and textile objects, by the printing technique with a binary deflected continuous liquid jet, with non-charged drops.

More exactly, this printing technique with a binary deflected continuous jet is a technique in which the liquid (ink) composition forms during the printing, drops which are not charged by an electric field, which each have a zero electric charge, which each form a dipole under the effect of an electric field, and which are then deflected by said electric field.

By convenience, this printing technique will be designated in the following by "SPI" technique.

The invention also relates to the use of this pigment ink composition, according to the invention, in a printer or printing head applying the printing technique with a liquid jet, notably an ink jet, a so-called "SPI" technique.

The invention further relates to a method for treating, marking or printing a substrate, a support or a textile object by projecting on this substrate, support or textile object, said pigment ink composition by the printing technique with a liquid jet, a so-called "SPI" technique.

The invention finally relates to a substrate, support or textile object provided with a marking, or treatment, or print obtained by drying and/or absorption of the pigment ink composition according to the invention.

The technical field of the invention is generally that of compositions of the pigment type, for treating, marking or printing textiles, and more specifically that of compositions, formulations, of ink of the pigment type for printing textiles with an ink jet.

### STATE OF THE PRIOR ART

Conventional compositions for printing textiles are pigment pastes which are used in conventional methods for printing textiles, for example methods notably applying flat or rotary frames.

These pastes have a very high viscosity obtained by addition of thickeners.

These pigment pastes in particular give the possibility of obtaining markings for which the properties of resistance to washing are excellent.

These conventional methods for printing textiles using these pastes are however difficulty to apply, do not have great flexibility in use, and do not allow fast changes in colors or patterns, unlike digital printing with inks.

The inks, different from pastes are easier to use.

Inks intended for the printing of textiles are of different types depending on the textile to be printed.

A distinction is essentially made between inks containing dyes, or dye inks and inks containing pigments or "pigment" inks.

In dye inks, different types of dyes are required or suitable according to the textile to be printed.

Thus, reactive, direct, acid, or dispersed dyes will be used depending on whether the textile is a cellulosic textile such as cotton or rayon, a polyester, wool or silk. In the case of the aforementioned dyes, a chemical reaction or a dissolution occurs for chemically or physically binding the molecules of dyes to the textile fibres. For example reactive dyes are perfectly suitable for printing cellulosic textiles such as cotton, and dispersed dyes are suitable for polyester.

In the dye inks, the presence of a binder is not required, since the dye is directly bound onto the fibres.

As this has already been mentioned, there exists another family of inks for printing textiles, i.e. so-called « pigment » inks in which the coloration is provided by pigments as dispersions of particles, and the adherence of which on the fibres is provided by binders, themselves also as dispersions of particles.

The pigment inks for textiles have the benefit of being able to be applied on any types of textiles.

In pigment inks, the presence of a binder is required since the pigment is bound by means of the binder on the fibres.

Let us specify that a coloring material entirely soluble in water or in a solvent will be called "dye" (coloring agent) or more exactly *"soluble"* dye (not to be mistaken with a dispersed dye or a dye in a dispersion defined below), and a coloring material insoluble in water and appearing as particles for which the size may for example vary from a few tens of nanometres to a few tens of micrometres will be called a *"pigment"*.

Let us specify that, in the field of printing of textiles, by "pigment" is meant a coloring material in particulate form insoluble in water or in the carrier of the composition and also insoluble during all the operations which make up the method for coloring textiles.

So-called "dispersed" dyes are also known, which are themselves also in particulate form and not soluble in water, but which are on the other hand solubilized in the fibers during the binding step on the textile.

A technique which is well suitable for printing textiles by means of an ink is the technique for printing with an ink jet which overcomes the drawbacks of conventional methods for printing textiles using highly viscous pastes.

Ink jet printing is a well-known technique, which allows printing, marking or decoration of any kinds of object, at a high rate, and without contact of these objects with the printing device, of variable messages at will, such as bar codes, best before dates, etc. and this even on non-planar supports.

Ink jet printing techniques are divided into two great types: i.e. the so-called *"Drop on demand"* or (*DOD*) technique and the so-called *"Continuous Ink Jet"* or (*CIJ*) technology.

The projection with a jet in the "drop on demand" technique may be accomplished with a so-called « bubble » ink jet, by a so-called "piezoelectric" ink jet, by a so-called "valve" ink jet or finally by a so-called "Hot Melt" ink jet or with a phase transition.

In the case of the bubble ink jet, the ink is vaporized in the vicinity of the nozzle and this vaporization causes ejection of the small amount of ink located between the resistor which vaporizes the ink and the nozzle. In the case of the piezoelectric ink jet, a sudden change in pressure caused by an actuator set into motion by the electric excitation of a piezoelectric crystal or ceramic and located in the vicinity of the nozzle, causes ejection of an ink drop.

In the case of the "Hot Melt" ink jet, the ink is without any solvent and is brought to beyond its melting point.

The "drop on demand" printing may therefore be carried out at room temperature, this is the case of the piezoelectric ink jet, of the valve ink jet or of the bubble ink jet, or at a high temperature, for example from 60°C to about 130°C, this is the case of a so-called "Hot Melt" (HM) ink jet or with a phase transition. The projection with a deflected continuous jet consists of sending ink under pressure into a cavity containing a piezoelectric crystal, from which the ink escapes through an orifice (nozzle) as a jet. The piezoelectric crystal vibrating at a determined frequency causes pressure perturbations in the ink jet, which oscillates and gradually breaks up into spherical droplets. An electrode, a so-called "charging electrode", placed on the path of the jet, where it breaks up, gives the possibility of giving these drops an electrostatic charge, if the ink is conductive. The thereby charged droplets are deflected in an electric field and allow the printing. The uncharged droplets, therefore not deflected, are recovered in a gutter where the ink is sucked up, and then recycled towards the ink circuit.

For all the types of ink jet technology, the viscosity of the inks is very low at the projection temperature, typically from 1 to 10 or 15 cPs and these technologies may therefore be described as technologies for depositing low viscosity ink.

The projection, spraying, of ink by a jet ensures contactless marking at a high running rate over objects not necessarily planar and with the possibility of changing the message at will. Ink compositions, suitable for projection by a jet, should meet a certain number of criteria inherent to this technique, relative, *inter alia,* to the viscosity, the solubility in a solvent for the cleaning, compatibility of the ingredients, proper wetting of the supports to be marked, etc., and the electric conductivity in the case of the deflected continuous jet.

In order to be able to be easily projected in "drop on demand" type printers (DOD) the inks should have a viscosity of less than about 10 to 15 cPs at the projection temperature.

The dye inks, for printing textiles, which do not contain any binder, may be highly concentrated in dye without the viscosity of the inks being high, and these inks may be easily projected in printers of the drop on demand "DOD" type.

On the other hand, textile inks of the "pigment" type, i.e. comprising pigments in a dispersion and binders in a dispersion, cannot contain more than 15% by weight of binder in a dispersion if it is desired that their viscosity does not exceed about 10 to 15 cPs.

However, it is known that if the binder content of a pigment ink is less than 15% by weight, then the binding of the ink on the fibres is poor.

The document entitled *"*Textile ink jet printing with pigment inks" of John Provost (2009, Provost Ink Jet Consulting Ltd) published on: http://www.provost-inkjet.com/resources/Textile+Ink+Jet+Printing+with+Pigment+Inks.pdf indicates that the amount of binder which has to be incorporated into the pigment pastes (*"textile screen printing paste"*) for obtaining acceptable performances of solidity towards washing should approximately be 15% by weight.

This document adds that, if such an amount of binder is added into an ink for printing textiles with the ink jet technique, the viscosity of the ink is then located outside the operating ranges of printing heads of the *"piezo"* type with drop on demand "DOD" with which the currently most widespread ink jet printers for textiles are equipped, such as ink jet printers for textiles of the type TX from Mimaki Engineering Ltd^{®}.

In other words, the inks containing such amounts of binders have a viscosity which goes beyond the viscosity which the inks can have which can be projected by present ink jet printers for textiles.

Indeed, only printers provided with printing heads of the *"DOD piezo"* type specially designed such as those from Du Pont ^{®} are capable of projecting inks with viscosity above 10 cPs without however exceeding about 15 cPs.
Patent application US-A1-2003/0128246 shows compositions comprising from 14 to 16.6% by weight of binder and having viscosities from 9 to 16 cPs.
Patent application US-A1-2005/0070629 shows compositions comprising 11% by weight of binder, and having viscosities from 5.8 to 8.1 cPs.
Patent applications US-A1-2009/0306285 and US-A1-2011/0018928 show compositions comprising from 8 to 13% by weight of binder, and having viscosities from 7.4 to 10 cPs.
Patent application US-A1-2014/0210900 shows ink compositions comprising 6.6% by weight of binder and having viscosities from 3 to 10 cPs.

In the field of pigment inks for ink jet printing, notably with the so-called "DOD" technique, it is further known that the binder/pigment weight ratio should be greater than 2 in order to obtain good adhesion, anchor, of the ink on the textile and resistance to washing.

Therefore, in pigment inks for ink jet printing notably with the so-called "DOD" technique, it is sought to combine a high pigment content in order to have sufficient coloration of the textile, and a high binder/pigment weight ratio, preferably greater than 2 in order to obtain good adhesion, anchor, of the ink on the textile and good resistance to washing, while ensuring that the viscosity is as low as possible, i.e. generally less than 10 cPs so that the ink remains able to be projected with an ink jet.

This constraint imposed on the viscosity of the ink which should remain low so that the ink may be projected has the result that the existing inks which may be projected with ink jet, notably by the "DOD" technique never have the combination of a sufficient coloration of the textile, and good adhesion, anchor, of the ink on the textile.

The amounts of binder and of pigment cannot be selected freely which is very bothersome for formulating inks notably depending on the type of textile to be treated.

In order to maintain the viscosity of the pigment inks for printing textiles in ranges of low viscosities compatible with projection with ink jet printers of the "DOD" type, it is quite possible not to incorporate any binder in these ink formulations, which makes these pigment inks able to be projected with this technique. The aforementioned problem of excessive viscosity due to the high binder content is thus solved, but at the end of the printing, an additional step is then required during which the textiles have to undergo an additional post-treatment with a binder in order to attain suitable resistances to washing.

This additional step increases the duration and the cost for treating the textile.

Therefore, considering the foregoing, there exists a need for a pigment ink composition for printing textiles which gives the possibility of obtaining, preferably at the same time, sufficient coloration of the textile, and good adhesion of the ink on the textile, while being able to be projected with an ink jet.

Further there exists a need for a pigment ink composition for printing textiles in which the amounts of binder and pigment may be freely selected, with a great deal of latitude, the ink further being always able to be projected.

There notably exists a need for a pigment ink composition for printing textiles for which the washing resistance properties (due to the binder) are at least comparable with the pigment pastes mentioned above.

The goal of the invention is to provide a pigment ink composition which inter alia provides a response to these needs.

Besides, a printing technique with a liquid jet, notably with an ink jet has recently been developed which by convenience we shall subsequently call, and in order to avoid repetitions, an "SPI" technique which is the acronym of "Super Piezo Inkjet".

This "SPI" technique is both different from the so-called *"Drop on demand"* or (*DOD*) technique and from the so-called *"Continuous InkJet"* or (*CIJ*) technology.

The "SPI" technique may be defined, as a simplification, as a printing technique with a binary deflected continuous jet "CIJ" in which, unlike the printing technique with a deflected continuous jet, where the projected droplets for printing each have a net non-zero electric charge, the droplets are not charged by an electric field, each have a net zero electric charge and each form a dipole under the effect of an electric field, and are then deflected by this field.

By "binary", is meant:
- that there exists a first trajectory of the droplets for the printing, and a second trajectory of the droplets for the recycling of the ink. In this second trajectory of the droplets, the droplets are recovered in a gutter where the ink is sucked up, and then recycled towards the ink circuit.
- that a message with a height of N pixels requires a printing head with N nozzles.

It is important to note that, whereas in the printing technique with a deflected continuous jet "CIJ" the deflected droplets are the ones which are printed, in the so-called "SPI" technique, the non-deflected drops are on the other hand the ones which are printed.

The "SPI" technique is thus widely described in the following documents [1] and [2] to which reference is made here explicitly, and which are introduced into the present description in their entirety:
Document WO-A2-2005/070676 (corresponding to documents FR-A1-2 851 495 and US-B2-7,192,121) [1], describes how droplets are formed in this technique by means of a printing head provided with an internal stimulation system.

More specifically, this document according to its claim 1 relates to an ink jet printer comprising:
- a printing head with one or several nozzles having a head body notably housed in each nozzle,
- a hydraulic path of the ink including a stimulation chamber in hydraulic communication with one of the printing nozzles emitting a pressurized ink jet along an axis of this nozzle,
- internal means for stimulating the ink jet emitted by the nozzle mechanically coupled with the ink housed in the stimulation chamber, these means acting on the jet emitted by the nozzle so as to break up the jet in a controlled way, and
- means for recovering the ink which is not received by a printing substrate,
- a generator or electric control signals receiving a control signal and issuing to the stimulation, means stimulation signals,
- an arrangement of charging electrodes defining around the axis of the nozzle upstream and downstream areas, the downstream area being further away from the nozzle than the upstream area, upstream and downstream electrodes of this arrangement being connected to electric potential sources so as to maintain in one of the areas a potential equal to that of the ink found in the body of the printing head, and in the other one of these areas, a potential different from the one of the ink found in the body of the printing head,
- an arrangement of deflection electrodes located axially downstream from the charging electrode arrangement,
characterized in that the generator of electric control signals issues to the stimulation means signals causing controlled breaking up of the jet intermittently in an upstream breaking up position located in the upstream area, in orderto intermittently form a droplet, thus separating the jet into a droplet and a segment and also causing controlled breaking up of the jet or of segments of the jet in a continuous way in a downstream breaking up position, the continuous jet emitted by the nozzle thus being transformed after the downstream area into a continuous sequence of electrically charged and non-charged ink droplets.

This document further relates, according to its claim 13, to a method for printing a support by means of said printer in which an ink jet is fractionated, emitted by a nozzle of the printer in order to form first droplets incident on a substrate in order to form dots and segments,
characterized in that,
the jet or the segments resulting from the fractionation of the jet are further fractionated into first drops and segments into second droplets, the second droplets resulting from this last fractionation being directed towards the gutter.

This document finally according to its claim 14 relates to an ink jet printer head comprising:
- a printing head with one or several nozzles having a head body (1) notably housed for each nozzle,
- a hydraulic path of the ink including a stimulation chamber in hydraulic communication with one of the printing nozzles emitting a pressurized ink jet along an axis of this nozzle,
- internal stimulation means of the ink jet emitted by the nozzle mechanically coupled with the ink housed in the stimulation chamber, these means acting on the jet emitted by the nozzle for breaking up the jet in a controlled way, and
- means for recovering the ink which is not received by a printing substrate,
- a generator of electric control signals receiving a control signal and issuing to the stimulation means, stimulation signals,
- an arrangement of charging electrodes defining around the axis of the nozzle of the upstream and downstream areas, the downstream area being further away from the nozzle than the upstream area, upstream and downstream electrodes of this arrangement being connected to electric potential sources so as to maintain in one of the areas a potential equal to that of the ink found in the body of the printing head, and in the other one of these areas a potential different from the one of the inks found in the body of the printing head,
- a deflection electrode arrangement axially located downstream from the charging electrode arrangement,
characterized in that the generator of electric control signals issued to the stimulation means signals causing controlled breaking up of the jet intermittently in an upstream breaking up position located in the upstream area, and also causing controlled breaking up of the jet or of segments of the jet continuously in a downstream breaking up position, the continuous jet emitted by the nozzle being thus transformed after the downstream area into a continuous sequence of electrically charged and non-charged ink drops.

Document FR-A1-2 906 755 (corresponding to documents WO-A1-2008/040777 and US-B2-8,162,450) [2], describes how the droplets are sorted in this technique under the effect of a variable field.

More specifically, this document according to its claim 1 relates to a method for deflecting a liquid jet comprising:
- the formation of a conductive liquid jet flowing out at a predetermined velocity (v) through a nozzle of a pressurized chamber along a hydraulic trajectory (A),
- the generation of a variable electric field (E) along the hydraulic trajectory (A) by applying a potential to a succession, in the direction of the hydraulic trajectory (A), of several deflection electrodes insulated from each other and forming a network which extends along a plane of electrodes parallel to the hydraulic trajectory (A) over a network length (L),
   wherein the potential applied to each electrode of the network is variable and the potential applied to the whole of the electrodes of the network has zero space and time averages,
- the deflection of the jet by the electric field (E) by mobilization of the charges within the jet.

Improvements to the technique which is the subject of documents [1] and [2] are described in the following documents [3], [4], and [5], to which reference is made here explicitly and which are introduced into the present description in their entirety:
Document FR-A1-2 952 851 (corresponding to documents WO-A1-2011/061331 and US-B2-8,540,350) [3], describes how to avoid interactions between neighbouring nozzles by compensating for mechanical crosstalk.

More specifically, this document relates to a continuous ink jet printer comprising a printing head which is characterized in that it comprises means for compensating mechanical crosstalk between adjacent chambers, these means simultaneously transmitting during transmission towards a stimulated chamber, a stimulation pulse, a pulse for compensation of the mechanical crosstalk over each of the lines serving a chamber actuator adjacent to the stimulated chamber.

In particular, claim 1 of this document relates to a continuous ink jet printer comprising a printing head comprising:
- a plurality of stimulation chambers, aligned along an alignment axis of the chambers,
- a planar diaphragm, the portions of which form a wall of each of the stimulation chambers,
- a plurality of nozzles being each respectively in hydraulic communication with one of the stimulation chambers,
- at least one charging electrode and one deflection electrode located downstream from the nozzles,
- a plurality of electromechanical actuators being each mechanically bound respectively to each of the diaphragm portions forming a wall of each of the stimulation chambers,
- a plurality of stimulation lines each intended to transmit stimulation pulses towards each of the various actuators respectively,
- a device for processing data to be printed receiving a carrier signal carrying data to be printed and issuing, delivering, depending on these data, stimulation pulses to the stimulation lines,
characterized in that it further comprises means for compensating mechanical crosstalk between adjacent chambers, these means simultaneously transmitting upon transmission towards a stimulated chamber, a stimulation pulse on a stimulation line, a pulse for compensating mechanical crosstalk on each of the lines serving a chamber actuator adjacent to the stimulated chamber.

This document according to its claim 2 also relates to a printing head of a continuous ink jet printer comprising:
- a plurality of stimulation chambers aligned along an alignment axis of the chambers,
- a planar diaphragm, portions of which form a wall of each of the stimulation chambers,
- a plurality of nozzles each being respectively in hydraulic communication with one of the stimulation chambers,
- at least one charging electrode and one deflection electrode located downstream from the nozzles,
- a plurality of electromechanical actuators each being mechanically bound respectively to each of the diaphragm portions forming a wall of each of the stimulation chambers,
- a plurality of stimulation lines each intended for transmitting stimulation pulses towards each of the various actuators respectively,
characterized in that it further comprises means for compensating mechanical crosstalk between adjacent chambers, these means simultaneously transmitting upon transmission to a stimulated chamber, a stimulation pulse on a stimulation line, a pulse for compensating the mechanical crosstalk on each of the lines serving a chamber actuator adjacent to the stimulated chamber.

This document finally, according to its claim 7, relates to a method for reducing the consequences of mechanical crosstalk between adjacent stimulation chambers of a printing head of a continuous inkjet printer including a planar diaphragm, portions of which form a wall of each of these stimulation chambers, at least one charging electrode and one deflection electrode located downstream from the nozzles, and electromechanical actuators for stimulating each chamber and a plurality of stimulation lines each intended for transmitting stimulation pulses towards each of the various actuators, characterized in that, simultaneously with the sending of a stimulation pulse to an actuator of a stimulated chamber, compensation pulses are sent towards each of the chambers adjacent to the stimulated chamber, towards each of the chamber actuators adjacent to the stimulated chamber.

Document FR-A1-2 971199 (corresponding to documents WO-A1-2012/107461 and US-A1-2013/307891) [4], describes a printing control method in which a change in polarity is carried out between two neighbouring nozzles.

More specifically, this document according to its claim 1, describes a method for controlling printing of a binary continuous ink jet printer provided with a printing head, or of a printing head of such a printer in order to print a pattern on a printing support in motion relatively to the head, the head comprising:
- a so-called multi-nozzle drop generator comprising:
- a body including:
   - stimulation chambers each capable of receiving ink under pressure,
   - ejection nozzles, each in communication with a stimulation chamber and each capable of ejecting an inkjet along its longitudinal axis, the nozzles being aligned along an alignment axis and laid out in a same plane,
- actuators, each mechanically coupled with a stimulation chamber, and capable of causing upon a pulse command a breaking up of a jet ejected by a nozzle in communication with said chamber at a distance Lbr from the plane of the nozzles,
- a deflection assembly located below the nozzles and including from the upstream side to the downstream side:
   - a shielding electrode,
   - a first dielectric layer adjacent to the shielding electrode,
   - at least one pair of deflection electrodes, each deflection electrode being surrounded on either side by a dielectric layer,
a method according to which:
- informations on the relative position of the support with respect to the head, are determined,
- the electrodes of a same pair are supplied with an alternating voltage in phase opposition relatively to each other,
- pulses are sent to the actuators in order to form, from the breaking up of a jet ejected by a nozzle in communication with the chamber with which is mechanically coupled said actuator at a distance Lbrfrom the plane of the nozzles, droplets which are not capable of being electrically charged by the deflection electrodes or jet segments subject to the electrostatic influence of the deflection electrodes,
- the pulses are controlled so as to minimize the total electric charge on the jet segments, which is contained inside the electrostatic influence volume of the deflection electrodes.

This document also according to its claim 9 relates to a binary continuous ink jet printer for applying said control method.

Document FR-A1-2 975 632 (corresponding to documents WO-A1-2012/163830 and US-A1-2014/168322) [5] describes how to increase the printing rate from 2 to 10 m/s by means of the droplet generator.

More specifically, this document according to its claim 1 describes a printing method for a binary continuous ink jet multi-nozzle printer or of a printing head of such a printer in order to print a pattern on a printing support in motion with respect to the head, the head comprising:
- a multi-nozzle drop generator comprising
- a body including:
   - one or several pressurized chambers each capable of receiving ink under pressure,
   - ejection nozzles in hydraulic communication with a pressurized chamber and each capable of ejecting an ink jet having a velocity Vj along its longitudinal axis (A), the nozzles being aligned along an alignment axis and laid out in a same plane,
- actuators, capable of causing upon a pulse command a breaking up of a jet ejected by a nozzle in order to form a succession of droplets,
a method according to which the support has relatively to the head, a velocity Vs, the distance between consecutive pixels in the direction of movement of the support is Dii, and according to which, droplets of a first category and droplets of a second category are formed by breaking up the jet, the droplets of the first category each having a first volume, all the first volumes being substantially equal to each other, the droplets of second category having second volumes not necessary equal to each other but all the droplets of second category having a volume which is not equal to the volume of a droplet of first category,
the trajectories followed by the droplets of first and second categories are differentiated by applying to at least one of the droplet categories a deflection force capable of differentiating the trajectories of the droplets of first category and of the droplets of second category, the trajectory of the droplets of first category encountering the printing support and the trajectory of the droplets of second category encountering a gutter for recovering these droplets,
a piece of information is generated relating to the instants when the successive pixels to be printed run in a position where they may be printed,
for printing a black pixel followed by a white pixel, a droplet of first category, and a droplet of second category are formed, the accumulated formation period of these first and second category droplets being equal to or greater than the running period of a pixel.

In documents [1], [2], [3], [4], and [5] no description of specific inks applied in the printers, printing heads and methods of these documents exist, nor any suggestion as to the criteria which should guide the selection of these inks.

### DISCUSSION OF THE INVENTION

The goal, mentioned above, and other further goals, are achieved according to the invention, with a pigment ink composition, for the printing of a textile substrate (a substrate made of textile), liquid at room temperature, comprising a solvent, said ink composition being an ink composition specifically for printing with a binary deflected continuous jet printing technique, wherein said ink composition forms, during the printing, drops which are not charged by an electric field, which each have a zero electric charge, which each form a dipole under the effect of an electric field, and which are then deflected by said electric field, characterized in that said ink composition comprises:
a) an aqueous solvent comprising at least 50% by volume of water based on the total volume of the solvent;
b) at least 13% by weight, preferably at least 15% by weight, based on the total weight of the ink composition, of one or several dispersion(s) of binding polymer(s) (binder(s) polymer(s));
c) one or several dispersion(s) of pigment(s); and further characterized in that:
d) the binding polymer(s) dispersion(s)/pigment(s) dispersion(s) ratio by weight is greater than 2, preferably greater than 3; and in that
e) the ink composition has a dynamic viscosity at 20°C of more than 16 cPs, preferably more than 20 cPs, still preferably more than 25 cPs.

A preferred range is from 18 to 25 cPs, more preferably from 20 to 23 cPs, still preferably from 21 to 23 cPs, for example 21 to 22 cPs.

Let us specify that the binding polymer(s) which may also be called binding resin(s), make(s) up the binder of the ink composition.

Advantageously, the ink composition comprises from 15% to 45% by weight, preferably from 15% to 25% by weight, still preferably from 15% to 20% by weight based on the total weight of the ink, of the dispersion(s) of binding polymer(s).

Advantageously, the pigment ink composition according to the invention comprises from 0.1 to 25% by weight, preferably from 3 to 25% by weight, still preferably from 5 to 15% by weight, based on the total weight of the ink composition, of the dispersion(s) of pigment(s).

Let us specify that the term of "textile" in the sense of the invention covers natural, artificial, and synthetic textiles as well.

By "textile" is also meant mixtures of several textiles.

The term "textile" also covers non-woven fabrics of natural, artificial or synthetic fibres.

Let us specify that the electric conductivity is measured with a commercial instrument and according to the principle well-known to the man skilled in the art, for example described on the site: http://fr.wikipedia.org/wiki/Conductim%C3%A9trie.

The electric conductivity may be measured according to the following standard:
ASTM D1125 - 14: Standard Test Methods for Electrical Conductivity and Resistivity of Water.

The electric conductivity may be measured for example with a commercially available conductimeter of the Radiometer^{®} Company.

The viscosity may be measured according to the following standard:
DIN 53019 -1: Measurements of viscosities and flow curves by means of rotational viscometers.

The dynamic viscosities may be measured for example by means of a viscometer with coaxial cylinders, such as the viscometer with coaxial cylinders of the *"Couette"* type of the Contraves^{®} Company or a Brookfield LVT viscometer at a shearing rate of the order of 60 s⁻¹.

The density may be measured according to the following standard:
ISO 15212-1:1998 Oscillation-type density meters.

The density may be measured for example by means of a vibrating tube densitometer of the Anton-Paar^{®} Company.

The particle sizes may be measured according to the following standard:
ISO 22412:2008 specifies a method for the application of dynamic light scattering (DLS) to the estimation of an average particle size and the measurement of the broadness of the size distribution of mainly submicrometer-sized particles or droplets dispersed in liquids.

The particles sizes may be measured for example by means of a granulometer of the Malvern^{®} Company using Quasi Elastic Light Scattering (QELS), also called photon autocorrelation.

The molecular mass have been measured by GPC (or size (steric) exclusion chromatography) using polystyrene standards.

Let us specify that the weight percentage of the dispersion of pigment(s) or of binding polymer(s), is expressed as a weight percentage of solid matter based on the total weight of the ink composition and not on the percentage of liquid dispersion, the concentration of which may vary.

By « room temperature », is generally meant a temperature from 5°C to 30°C, preferably from 10°C to 25°C, still preferably from 15°C to 24°C, better from 20°C to 23°C. It is quite understood that the ink is liquid at atmospheric pressure.

The term of "binary" is well known in the field of the art and was clearly defined above.

The ink composition according to the invention has simultaneously all the features a), b), c), d), and e).

A pigment ink composition having simultaneously all said features has never been described in the prior art as notably illustrated by the documents mentioned above.

This (these) features differentiate the ink composition according to the invention notably from the ink compositions for the "DOD" printing technique or for the conventional "CIJ" printing technique and give to the ink composition according to the invention advantageous properties as compared with ink compositions for the "DOD" printing technique or the "CIJ" printing technique.

The pigment ink composition according to the invention is actually first of all defined by the fact that it contains at least 13% by weight, preferably at least 15% by weight, based on the total weight of the ink, of one or several dispersion(s) of binding polymer(s) and in that the binding polymer(s) dispersion(s)/pigment(s) dispersion(s) weight ratio, also called l/p ratio is greater than 2, preferably greater than 3.

As the binder content of the ink composition according to the invention is high, as well as the binding polymer(s)/pigment(s) weight ratio which is greater than 2, preferably greater than 3, it is possible to obtain good adhesion, anchor, of the ink on the textile and good resistance to washing, and as the pigment content is also high, this good adhesion of the ink on the textile and this good resistance to washing are generally combined with sufficient coloration of the textile.

Such properties have never been obtained with sprayable (which may be projected) ink compositions of the prior art.

According to another fundamental feature of the ink composition according to the invention, said ink composition because of the high contents of binder and of pigment which it contains - and which give the possibility of obtaining a combination of properties never obtained in the prior art - has a high viscosity greater than that of the ink compositions for "CIJ" or "DOD" printing technique.

Thus, the ink composition according to the invention has a viscosity at 20°C of more than 16 cPs, preferably more than 25 cPs, whereas the ink compositions for the "CIJ" or "DOD" printing technique have a viscosity at 20°C, of less than 16 cPs.

However, in spite of this high viscosity, it proved to be totally surprising that the ink composition of the invention was able to be projected since, surprisingly, it is highly suitable for printing with a specific "SPI" technique.

More generally, it proved surprisingly that the ink composition according to the invention, which has simultaneously the five features listed above was particularly very suitable for the specific so-called "SPI" printing technique.

The ink composition according to the invention which may be projected by « SPI » is therefore not subject to the constraint imposed on the viscosity of the existing ink compositions which may be projected with an ink jet, notably by the "DOD" technique which never have the combination of a sufficient coloration of the textile and a good adhesion of the ink on the textile.

The binder and pigment amounts of the compositions according to the invention may be freely selected since the composition according to the invention must not necessarily have a low viscosity.

Thus, in the compositions of the invention, it is possible to put more pigment in order to have stronger coloration, the l/p ratio being always greater than 2, or else more binder for having better resistance to washing, or else it is possible to both put more pigment and more binder in order to have both stronger coloration and better resistance to washing.

In other words, with the compositions of the invention, one has a very significant latitude on the amounts of pigment and binder since the ink compositions according to the invention, in spite of their high viscosities, may however be projected by the SPI technique.

In other words, the ink compositions according to the invention may be formulated with very significant latitude and remain printable at high viscosities.

Finally, the ink composition according to the invention meets the needs mentioned above and provides a solution to the problems mentioned above.

It was indicated above that the ink composition according to the invention is an ink composition specifically for printing with a very specific printing technique, i.e. a printing technique with a binary deflected continuous jet, in which the ink composition forms during the printing, drops, which are not charged by an electric field, which have each a zero electric charge, which form each a dipole under the effect of an electric field, and which are then deflected by said electric field.

This technique is referred to as "SPI" by convenience.

The ink composition according to the invention is a composition for any SPI technique, i.e. for all the "SPI" processes, methods and it may be applied in all printers and printing heads operating according to this technique.

Thus it is specifically indicated that the ink composition according to the invention is a composition for processes, methods, printers and printing heads as described in documents [1], [2], [3], [4] or [5] mentioned above; for the processes, methods, printers and printing heads of these documents as they are explicitly discussed above herein; and for any process, method, printer, or printing head defined by the combination of the features of at least two processes, methods, printers or printing heads as described in documents [1], [2], [3], [4] or [5] described above; or defined by the combination of at least two processes, methods, printers or printing heads as explicitly discussed above herein. As a combination, mention may be made of a combination of documents [1] and [2] or of documents [1] and [2] and of one or several from among the documents [3] to [5].

This means that the ink composition according to the invention is specifically suitable for printing with this specific "SPI" technique and that it is therefore, consequently intrinsically different from an ink composition for the "DOD" printing technique or the conventional "CIJ" printing technique, apart from the fact that the formulation of the ink according to the invention already differentiates it from these inks.

More exactly, the ink composition according to the invention is first of all an ink composition for printing with a printing technique with a "CIJ" deflected continuous jet, and from this simple fact, it is clearly different from an ink composition for printing with a "DOD" drop-on-demand printing technique.

Next, the ink composition according to the invention forms during the printing of the droplets which are not charged by an electric field, each have a zero electric charge, each form a dipole under the effect of an electric field, while the compositions for the conventional "CIJ" technique form charged drops.

Finally, the ink composition according to the invention is printed by using an electric field for deflecting the drops, which there again clearly differentiate it from an ink composition for the DOD technique.

The ink composition according to the invention comprises solid particles, such as pigments and binders.

Generally, the maximum size of the solid particles is from 0.02 to 2 µm, preferably from 0.02 to 1 µm.

Advantageously, the average or maximum size of the particles is measured by means of laser granulometer (particle sizer), for example by quasi-elastic light scattering as with the Zetasizer Nano-S^{®} from Malvern^{®} or by light diffraction as with the Mastersizer^{®} from Malvern^{®}.

In the conventional "CIJ" printing technique, the net charge taken by the drops depends on the perfect synchronism between the square wave ("créneau") of the electric charging field and the instant when the breaking up occurs. The particles in too large amounts perturb the breaking up and make it random, whence a variable loaded charge, whence poor positioning of the drops after deflection and therefore poor printing.

On the contrary in the so-called "SPI" technique, as the net charge of the droplets is zero, the accuracy of the breaking up instant is not critical. It was therefore demonstrated, according to the invention that solid particles, such as pigments, in a much larger amount than in the ink compositions for the conventional "CIJ" technique may be used in the ink composition according to the invention without posing any problem during the printing and giving markings or treatments of excellent qualities. The maximum size of the solid particles of the ink composition according to the invention is only limited by the size of the nozzle.

Moreover, the sedimentation problems observed with possibly dense particles such as mineral pigments like titanium oxide become manageable in the compositions according to the invention, the viscosity of which is higher.

In other words, according to the invention, the solid particles in a large number become "printable" while they were not with compositions for conventional CIJ.

Advantageously, when the ink composition according to the invention further comprises at least one soluble polymer (other than the polymer(s) of the binder in the dispersion), then said polymer has an average weight molecular weight of more than 70,000 Daltons, preferably from 75,000 to 200,000 Daltons, still preferably from 80,000 to 200,000 Daltons.

There again this is a feature which differentiates the ink composition according to the invention from the ink compositions for the "DOD" printing technique or for the conventional "CIJ" printing technique and gives the ink composition according to the invention advantageous properties as compared with ink compositions for the "DOD" printing technique or for the "CIJ" printing technique.

Indeed, the polymers contained in the ink compositions for the "CIJ" printing technique have a molecular mass which does not exceed 70,000.

In a similar way as to what has been discussed above for solid particles in a large amount, the ink composition according to the invention may contain polymers with very long chains without occurrence of any problems during printing and giving markings and treatments of excellent qualities.

In other words, according to the invention, the polymers with a very long chain become "printable" while they were not with compositions for conventional CIJ.

Preferably, the solvent comprises at least 90% by volume of water, still preferably at least 99% by volume of water, better 100% by volume of water based on the total volume of the solvent of the composition.

When the solvent comprises 100% by volume of water this means that it consists of 100% water.

When the solvent does not consist of 100% by volume of water, it may further comprise, in addition to water, one or several organic solvent compound(s), for example glycerol.

The man skilled in the art will be able to easily identify among solvent compounds, the ones which are required for the textile application.

The ink composition according to the invention may essentially (substantially) be based on water and only comprise a very small amount of organic solvent compound(s), generally less than 10% by weight, preferably less than 5%, still preferably less than 1% by weight, based on the total weight of the ink composition.

The ink composition according to the invention may even be substantially free of organic solvent compounds (0%).

It was seen above that solid particles like pigments which the ink composition according to the invention possibly contains, may have specific particle sizes.

The pigments which may be used in the ink composition according to the invention may be selected from known conventional organic or mineral pigments specifically suitable for coloration of textiles.

The man skilled in the art can easily identify among said pigments, those which are specifically suitable for coloring textiles.

For example, the pigments specifically suitable for printing textiles should have a good or even very good light fastness.

The pigment(s) may thus be generally selected from pigments known under the name of "C.I. Pigments" but also from solid particles not referenced in the *"Color Index"* (C.I.) such as particles of metals or of alloys or of mixtures of metals such as copper and/or silver particles for example, metal oxide particles, ceramic particles, refractory mineral compound particles, and particles of any other mineral compound.

The pigment(s) may be selected for example from among azo pigments, pigments with multiple condensed rings such as phthalocyanins, perylenes, anthraquinones, quinacridones, thioindigos and isoindolines, laquers, aniline black and carbon black.

The pigment(s) of the ink composition according to the invention may be selected from red or magenta pigments, notably from among C. I. Pigment Red 2, C. I, Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C.I. Pigment Red 146,C. I. Pigment Red 149, C. I. Pigment Red 166, C. I. Pigment Red 177, C. I. Pigment Red 178, C.I. Pigment Red 202, and C. I. Pigment Red 222.

The pigment(s) of the ink composition according to the invention may be selected from among orange or yellow pigments, notably from among C. I. Pigment Orange 31, C.I. Pigment Orange 34, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 83, C. I. Pigment Yellow 93, C. I. Pigment Yellow 94, C. I. Pigment Yellow 128, and C. I. Pigment Yellow 138.

The pigment(s) of the ink composition according to the invention may be selected from cyan, green or blue pigments, notably selected from among C. I. Pigment Blue 15, C. I. Pigment Blue 15:2, C. I. Pigment Blue 15:3, C. I. Pigment Blue 16, C. I. Pigment Blue 50; C. I. Pigment Green 36 and C. I. Pigment Green 7.

The binding polymer(s) is (are) generally selected from binding polymers specifically suitable for the coloration of textiles.

The man skilled in the art can easily identify among binding polymers those which are specifically suitable for coloring textiles.

Generally, said polymers, specifically suitable for coloring textiles, should have a Tg (glass transition temperature) far below the room temperature so that the textiles remain soft.

Advantageously, said Tg may be below +5°C, preferably below 0°C, more preferably below -10°C, even more preferably below -20°C, still better below -40°C.

For example, said Tg may be from +5°C to -10°C. Some polymers have very low Tgs, for example from -20°C to -40°C.

Some polymers specifically suitable for coloring textiles may also be "self-crosslinking" to resist rubbing.

Advantageously, the binding polymer(s) in a dispersion may be selected from (meth)acrylic polymers, polyurethanes, chlorinated rubber lattices, dispersions of polymers of very low (Tg) (glass transition temperature), i.e. with a Tg of less than +5°C, preferably less than 0°C, more preferably less than -10°C, or even preferably less than -20°C, still better less than -40°C, and the combinations of two or more of the latter.

The ink composition, according to the invention, may further comprise one or several plasticizers (of the polymer(s) of the binder) selected, for example, from plasticizers known to the man skilled in the art and selected according to the binder used.

Mention may be made, as a plasticizer, for example of thermoplastic polyurethanes, phthalates, adipates, citrates and esters of citric acid, alkyl phosphates, glycerol, lactic acid, oleic acid, polypropylene glycol, triglycerides of fatty acids, levulinic acid; and mixtures thereof.

The plasticizer(s) is (are) generally present in an amount of at least 0.05%, preferably from 0.1 to 20% by weight, of the total weight of the ink composition.

The ink composition according to the invention may further comprise one or several additives notably selected from among compounds which improve the solubility of certain of its components, the printing quality, the adhesion, or further the control of wetting of the liquid, for example of ink on various textile supports.

The additive(s) may be selected for example from among anti-foam agents, chemical stabilizers, UV stabilizers; surfactants, agents inhibiting corrosion by salts, bactericides, fungicides, bacteriostatic agents and biocides, pH regulating buffers, agents providing properties promoting coalescence of the binder particles, humectants, wetting agents, etc...

The man skilled in the art will be able to easily identify from among these additives, those which are required for the textile application.

The additive(s) is (are) used at very small doses, generally less than or equal to 5% and sometimes as small as 0.01%, depending on whether these are anti-foam agents, stabilizers or surfactants.

The invention also relates to the use of the ink composition according to the invention, as described above, in a printer or printing head applying a binary deflected continuous jet printing technique wherein said ink composition forms during the printing drops which are not charged by an electric field, which each have a zero electric charge, which each form a dipole under the effect of an electric field, and which are then deflected by said electric field.

This printing technique is therefore the so-called "SPI" technique.

This technique, this printer and this printing head are as described in documents [1], [2], [3], [4], or [5] mentioned above or in any combination thereof. These are notably printers and printing heads of these documents taken alone or as a combination as explicitly discussed above herein.

The goal of the invention is also a method for marking, treating or printing textile substrates, supports or objects (substrates, supports or objects made of textile), by projecting on these substrates, supports or objects an ink composition, with a binary deflected continuous jet printing technique wherein said ink composition forms during the printing, drops which are not charged by an electric field, which each have a zero electric charge, which each form a dipole under the effect of an electric field, and which are then deflected by said electric field, characterized in that said ink composition is the ink composition according to the invention, as described in the foregoing.

This printing technique is therefore the so-called "SPI" technique.

This technique is as described in documents [1], [2], [3], [4], or [5] mentioned above, taken alone or as a combination through processes, methods, printers and printing heads applying this technique. This is notably the printing technique of these documents taken alone or as a combination as explicitly discussed above herein through the discussion of processes, methods, printers and printing heads applying this technique.

The goal of the invention is also a substrate, support or object made of textile, provided with a marking or treatment or print obtained by drying and/or absorption (in the substrate or support) of the ink composition, according to the invention, as described above.

Said marking generally essentially comprises all the non-volatile solid materials, such as the pigment of the ink composition and/or the binder, and it is obtained by evaporation and/or absorption in the textile substrate, of essentially the whole of the other volatile or migrating constituents of the ink composition, such as the carrier, vehicle.

This substrate may for example be made of cotton, made of rayon fibers ("Fibranne"), of viscose, of polyester, of wool, of polyamide or of a mixture thereof.

Markings, prints, treatments of a quality comparable with the prints by conventional means of textile printing such as prints with a flat or rotary frame are obtained.

The invention will be better understood upon reading the following description of embodiments of the invention, given as illustrative and non-limiting examples.

### DETAILED DISCUSSION OF PARTICULAR EMBODIMENTS

### Examples 1 to 7:

In all these examples, ink compositions according to the invention are prepared.

These ink compositions comprise, the ingredients mentioned in Table I, in the proportions mentioned in Table I.

These compositions are generally prepared by simply mixing the ingredients.

According to the ink compositions, the binder percentages (% solid), pigment percentages (% solid) and viscosity (in mPa.s = cPs) at 20°C have also been indicated in the Table I.

**TABLE I - INK COMPOSITIONS**

| Constituents (percentages by mass) | Example 1 | Example 2 | Example 3 | Example 4 | Example 5 | Example 6 | Example 7 |
|---|---|---|---|---|---|---|---|
| Water in a sufficient amount for obtaining a viscosity of: | 20 cPs | 18 cPs | 22 cPs | 25 cPs | 21 cPs | 23 cPs | 23 cPs |
| Glycerol | 5 | 5 | 5 | 5 | 5 | 5 | 5 |
| 1-2 Benzisothiazoline-3-one at 20% in water (biocide) | 0.3 | 0.3 | 0.3 | 0.3 | 0.6 | 0.3 | 0.3 |
| Anti-foam agent | 0.5 | 0.5 | 0.5 | 0.5 | 1 | 0.5 | 0.5 |
| Carboset 531 ^{®} (25 % solids) | 23.2 | 29 | 22.6 | 20 | 24.4 | 24 | 24 |
| Dispersion of C.I. Pigment blue 15:3 | 8.6 | | | | | | |
| Dispersion of C.I. Pigment Red 146 | | 11.8 | | | | | |
| Dispersion of C.I. Pigment Yellow 83 | | | 7.8 | | | | |
| Dispersion of C.I. Pigment Orange 34 | | | | | | 8.2 | |
| Dispersion of C.I. Pigment Green 7 | | | | | | | 7.2 |
| Dispersion of C.I. Pigment Yellow 138 | | | | | 7.8 | | |
| Dispersion of C.I. Pigment Violet 25 | | | | 10 | | | |
| % of binder in dry % | 13.6 | 13.9 | 13.7 | 13.1 | 13.9 | 14 | 14.3 |
| % of pigment in dry % | 6.1 | 6.8 | 6.2 | 5.9 | 6.6 | 6.7 | 6 |
| Viscosity (mPa.s) at 20°C | 20 | 18 | 22 | 25 | 21 | 23 | 23 |
| « SPI » printing | Yes | Yes | Yes | Yes | Yes | Yes | Yes |

The dynamic viscosities have been measured by means of a viscometer with coaxial cylinders namely a Brookfield LVT viscometer at a shearing rate of the order of 60 s⁻¹ or a viscometer of the *"Couette"* type of the Contraves^{®} Company.

Carboset ^{®} 531 is a dispersed polymer from Lubrizol.

The compositions of examples 1 to 7 gave suitable prints in a prototype printer applying the so-called "SPI" technique having a nozzle diameter of 40 µm.

The prints on cotton were tested for their solidity upon rubbing according to the NF-EN-105-X12 standard (July 1995).

The results on complete solids ("applets") are given in the following table II:

**TABLE II**

| Example | Score | |
|---|---|---|
| | DRY | Wet |
| 1 | 3-4 | 2 |
| 2 | 2-3 | 2 |
| 4 | 3-4 | 2-3 |
| 5 | 4 | 3 |
| 6 | 3-4 | 2-3 |
| 7 | 4 | 3 |

The best result is illustrated by the mark 5.

The prints were further tested on several textiles for their solidity to washing according to the NF EN ISO 105-C06 standard (September 1997). The results are given in the following table III:

**TABLE III**

| Example | Test | Score | | | | | | |
|---|---|---|---|---|---|---|---|---|
| | | Shade | Washing out | | | | | |
| | | | Acetate | Cotton | Nylon | Polyester | Acrylic | Wool |
| 1 | C2S | 4 | 3-4 | 3-4 | 4 | 3 | 3 | 4 |
| 2 | C2S | 4 | 4 | 4 | 4-5 | 4 | 3-4 | 4 |
| 3 | C2S | 4 | 4 | 4 | 4 | 3 | 3 | 4 |
| 4 | C2S | 4 | 4-5 | 4 | 4-5 | 4 | 4 | 4.5 |
| 5 | C2S | 4 | 3-4 | 3-4 | 4 | 4 | 4 | 4 |
| 6 | C2S | 4 | 3-4 | 3-4 | 4 | 3-4 | 3 | 4 |
| 7 | C2S | 4 | 4 | 4 | 4-5 | 3-4 | 3-4 | 4 |

## Claims

1. A pigment ink composition, for the printing of a textile substrate, liquid at room temperature, comprising a solvent, said ink composition being an ink composition specifically for printing with a binary deflected continuous jet printing technique, wherein said ink composition forms, during the printing, drops which are not charged by an electric field, which each have a zero electric charge, which each form a dipole under the effect of an electric field, and which are then deflected by said electric field, **characterized in that** said ink composition comprises:
a) an aqueous solvent comprising at least 50% by volume of water based on the total volume of the solvent;
b) at least 13% by weight, preferably at least 15% by weight, based on the total weight of the ink composition, of one or several dispersion(s) of binding polymer(s);
c) one or several dispersion(s) of pigment(s); and further **characterized in that**:
d) the binding polymer(s) dispersion(s)/pigment(s) dispersion(s) weight ratio is greater than 2, preferably greater than 3; and **in that**
e) the ink composition has a dynamic viscosity at 20°C of more than 16 cPs, preferably more than 20 cPs, still preferably more than 25 cPs.

2. The ink composition according to claim 1, which comprises from 15% to 45% by weight, preferably from 15% to 25% by weight, still preferably from 15% to 20% by weight based on the total weight of the ink, of the dispersion(s) of binding polymers(s).

3. The ink composition according to claim 1 or 2, which comprises from 0.1 to 25% by weight, preferably from 3 to 25% by weight, still preferably from 5 to 15% by weight, based on the total weight of the ink composition, of the dispersion(s) of pigment(s).

4. The ink composition according to any one of the preceding claims, wherein the solvent comprises at least 90% by volume of water, still preferably at least 99% by volume of water, better 100% by volume of water based on the total volume of the solvent.

5. The ink composition according to claim 4, wherein the solvent does not consist of 100% by volume of water, and further comprises, in addition to water, one or several organic solvent compound(s).

6. The ink composition according to any one of the preceding claims, wherein, the pigment(s) is (are) selected from known conventional organic or mineral pigments specifically suitable for the coloration of textiles.

7. The ink composition according to any one of the preceding claims wherein the pigment(s) is (are) selected from pigments known under the name of "C.I. Pigments", the solid particles not referenced in the "Color Index" (C.I.) such that the particles of metals or of alloys or of mixtures of metals such as copper and/or silver particles for example, metal oxide particles, ceramic particles, particles of refractory mineral compounds, and particles of any other mineral compound.

8. The ink composition according to any one of the preceding claims, wherein the pigment(s) is (are) selected from azo pigments, pigments with multiple condensed rings such as phthalocyanins, perylenes, anthraquinones, quinacridones, thioindigos and isoindolines, laquers, aniline black and carbon black.

9. The ink composition according to any one of the preceding claims, wherein the pigment(s) is (are) selected from red or magenta pigments, notably from among C. I. Pigment Red 2, C. I, Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C.I., Pigment Red 146,C. I., Pigment Red 149, C. I. Pigment Red 166, C. I. Pigment Red 177, C. I. Pigment Red 178, C.I., Pigment Red 202, and C. I. Pigment Red 222;
from among orange or yellow pigments, notably from among C. I. Pigment Orange 31, C.I. Pigment Orange 34, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 83, C. I. Pigment Yellow 93, C. I. Pigment Yellow 94, C. I. Pigment Yellow 128, and C. I. Pigment Yellow 138; and
from among cyan, green or blue pigments, notably from among C. I. Pigment Blue 15, C. I. Pigment Blue 15:2, C. I. Pigment Blue 15:3, C. I. Pigment Blue 16, C. I. Pigment Blue 50; C. I. Pigment Green 36, and C. I. Pigment Green 7.

10. The ink composition according to any one of the preceding claims, wherein the binding polymer(s) is (are) selected from binding polymers specifically suitable for the coloration of textiles.

11. The ink composition according to claim 10, wherein the binding polymer(s) in dispersion is (are) selected from among (meth)acrylic polymers, polyurethanes, chlorinated rubber lattices, dispersions of polymers of very low Tg (glass transition temperature), and combinations of two or more of the latter.

12. The ink composition according to any one of the preceding claims, which further comprises one or several additives, for example this or these additives are selected from among anti-foam agents, chemical stabilizers, UV stabilizers; surfactants, agents inhibiting corrosion by salts, bactericides, fungicides, bacteriostatic agents and biocides, pH regulating buffers, agents providing properties promoting coalescence of binder particles, humectants, and wetting agents.

13. The use of an ink composition, according to any one of claims 1 to 12, in a printer or printing head applying a binary deflected continuous jet printing technique wherein said ink composition forms during the printing drops which are not charged by an electric field, which each have a zero electric charge, which each form a dipole under the effect of an electric field, and which are then deflected by said electric field.

14. A method for marking, treating or printing a textile substrate, support, or object, by projecting on this substrate, support or object an ink composition, with a binary deflected continuous jet printing technique wherein said ink composition forms during the printing drops which are not charged by an electric field, which each have a zero electric charge, which each form a dipole under the effect of an electric field, and which are then deflected by said electric field, **characterized in that** said ink composition, is the ink composition according to any one of claims 1 to 12.

15. A substrate, support or object made of textile, provided with a marking or treatment or print obtained by drying and/or absorption of the ink composition, according to any one of claims 1 to 12.

16. The substrate according to claim 15, which is made of cotton, made of rayon fibres, of viscose, of polyester, of wool, of polyamide, or of a mixture thereof.
